Europäisches Patentamt

European Patent Office

Office européen des brevets

(11) Veröffentlichungsnummer: **0 058 907**
**B1**

(12) **EUROPÄISCHE PATENTSCHRIFT**

(45) Veröffentlichungstag der Patentschrift:
**14.08.85**

(51) Int. Cl.⁴: **H 05 B 6/64, A 47 J 29/00**

(21) Anmeldenummer: **82101107.9**

(22) Anmeldetag: **15.02.82**

(54) **Zusatzvorrichtung für Mikrowellengeräte.**

(30) Priorität: **20.02.81 DE 3106236**

(43) Veröffentlichungstag der Anmeldung:
**01.09.82 Patentblatt 82/35**

(45) Bekanntmachung des Hinweises auf die Patenterteilung:
**14.08.85 Patentblatt 85/33**

(84) Benannte Vertragsstaaten:
**AT BE CH FR GB IT LI LU NL SE**

(56) Entgegenhaltungen:
**FR - A - 2 358 802**
**FR - A - 2 367 003**
**US - A - 2 807 701**
**US - A - 4 027 132**
**US - A - 4 104 957**
**US - A - 4 133 996**
**US - A - 4 140 887**
**US - A - 4 233 325**
**US - A - 4 280 032**

(73) Patentinhaber: **Nibbe, Bodo Bernd, Karlsplatz 6/IV,
D-8000 München 2 (DE)**
Patentinhaber: **Hirsch, Paul, Karl-Theodor-Strasse 91,
D-8000 München 40 (DE)**

(72) Erfinder: **Nibbe, Bodo Bernd, Karlsplatz 6/IV,
D-8000 München 2 (DE)**
Erfinder: **Hirsch, Paul, Karl-Theodor-Strasse 91,
D-8000 München 40 (DE)**

(74) Vertreter: **Hasse, Wilhelm Dr. et al, Asamstrasse 8,
D-8000 München 90 (DE)**

## Beschreibung

Die Erfindung bezieht sich auf eine Zusatzvorrichtung für Mikrowellengeräte gemäss dem Überbegriff des Anspruchs 1.

Aus der US-A-4 027 132 ist es bekannt, Gargut wie z.B. Pizza im Garraum eines Mikrowellenherdes teilweise gegen die Mikrowellen abzuschirmen. Dadurch soll erreicht werden, dass Teile des Garguts, z.B. der Boden der Pizza, stärker als andere Teile, wie die Pizzafüllung, erwärmt werden. Die stärker erwärmten Bereiche des Garguts heizen bei dieser Anordnung die nicht direkt den Mikrowellen exponierten Bereiche auf. Die Heizwirkung dauert auch nach der Entnahme aus dem Mikrowellengerät an, bis sich die stärker erwärmten Bereiche abgekühlt haben. Die Abschirmung gegen Mikrowellen ist bevorzugt wasserdampfdurchlässig ausgebildet, so dass der insbesondere beim Garen von Tiefkühlgut entstehende Wasserdampf entweichen kann und die Garwirkung der eines Elektro- oder Gasherdes entspricht.

Es ist bei Mikrowellengeräten von Nachteil, dass nicht alle Gargüter bzw. Lebensmittel durch Mikrowellen tischfertig zubereitet werden können. Zu den für die Erwärmung durch Mikrowellen nicht geeigneten Lebensmitteln gehören z.B. Reis, Hülsenfrüchte, Teigwaren, weil sie bei den kurzen Garzeiten nicht ausquellen können. Eier explodieren beispielsweise. Eine Möglichkeit der tischfertigen Zubereitung dieser Lebensmittel mit Mikrowellen ist auch bei der Vorrichtung gemäss der US-A-4 027 132 nicht gegeben.

Ausgehend von diesem Stand der Technik liegt der Erfindung die Aufgabe zugrunde, mittels einer Zusatzvorrichtung auch das Garen solcher Gargüter mit einem Mikrowellengerät zu ermöglichen, die bislang aufgrund ihrer Substanz in einem Mikrowellengerät nicht tischfertig zubereitet werden konnten.

Diese Aufgabe ist durch die Merkmale im Kennzeichen des Anspruchs 1 gelöst. Vorteilhafte Weiterbildungen der Erfindung sind in den Unteransprüchen gekennzeichnet.

Die erfindungsgemässe Zusatzvorrichtung besteht im wesentlichen aus einem Garraum mit einer Abschirmung, in den das gegen Mikrowellen abzuschirmende Gargut eingebracht wird. Die vom Mikrowellengerät ausgehenden Strahlen werden zur Erwärmung von Wasser verwendet, das verdampft, die Abschirmung durchdringt und das Gargut erwärmt. Die vorteilhafte Lösung der Erfindung besteht somit darin, dass nicht das Gargut selbst mit Mikrowellen erwärmt wird, sondern die Mikrowellen zur Erzeugung eines Energieträgers ausserhalb des Garraumes, d.h. Wasserdampf, verwendet werden, der den Garvorgang innerhalb des Garraums ausschliesslich bewirkt.

Es können nun auch Speisen mittels Mikrowellen gegart werden, die den Mikrowellen nicht unmittelbar ausgesetzt werden dürfen. Die Garzeiten sind wesentlich verkürzt. Z.B. werden zum Kochen eines Eis nur noch 1 bis 1¹/₂ Minuten benötigt.

Bei entsprechendem Volumen des Garraums ermöglicht es die Erfindung auch, verschiedene Gargüter, soweit diese den gleichen Garungsbedingungen unterliegen, in einem einzigen Arbeitsgang zu garen.

Die Erfindung wird im folgenden anhand von Ausführungsbeispielen und der Zeichnung näher erläutert. In dieser zeigen:

Figur 1 rechts ein erstes und links ein zweites Ausführungsbeispiel und

Figur 2 ein drittes Ausführungsbeispiel.

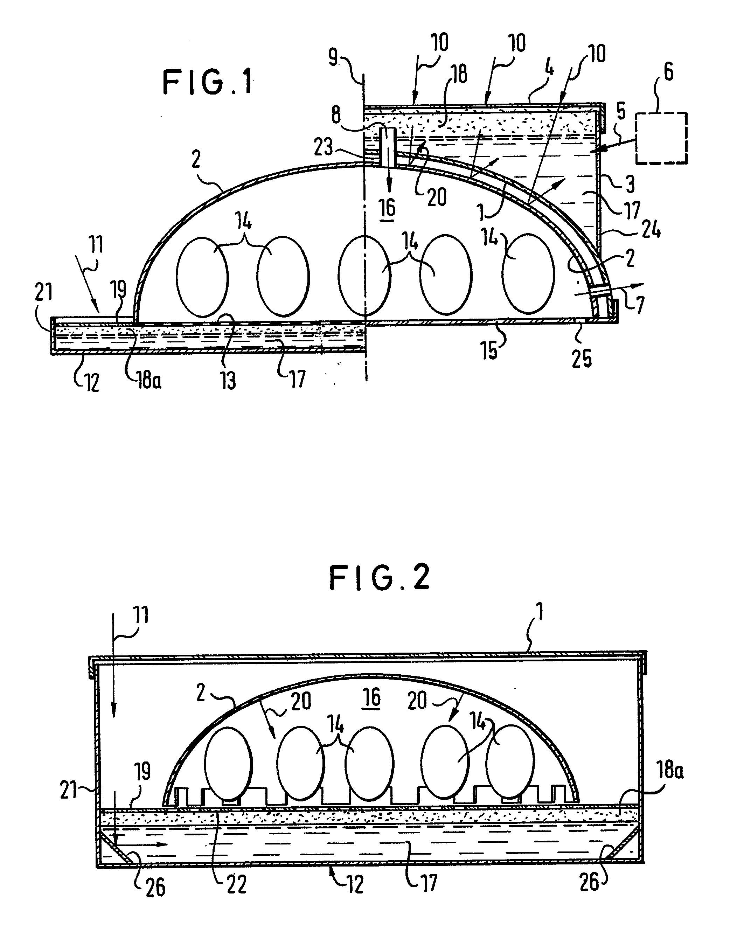

Die auf der rechten Seite der Fig. 1 gezeigte Zusatzvorrichtung besteht aus einem Garraum 16, der durch eine als Abschirmung gegen Mikrowellen dienenden Haube 2 aus reflektierendem Material, z.B. Aluminium, und eine Bodenfläche 15 gebildet ist, die aus einem metallischen oder nichtmetallischen Material bestehen kann. Über der Haube 2 ist eine Abdeckung 1 vorgesehen, die mikrowellendurchlässig ist. Auf der Haube 2 ist ein Wasserbehälter 3 angeordnet, der eine seitliche Wandung 24 und eine deckelförmige Abdeckung 4 aufweist. Der Wasserbehälter 3 umfasst einen Wasserraum 17 und einen Dampfraum 18, der über eine Dampfzuleitung 8 mit dem Garraum 16 verbunden ist. Die Dampfzuleitung ist als Rohr 23 ausgebildet. Treffen nun Mikrowellen (Strahlengang 10) auf die Haube 2 auf, dann werden die Mikrowellen in Reflexionsrichtung 20 umgelenkt und erhitzen die geringe Wassermenge, die sofort verdampft. Der Dampf gelangt über die Dampfzuleitung 8 in den Garraum 16 und gart das Gargut, d.h. Eier 14. Der überschüssige Dampf wird durch eine Dampfableitung 7 abgesaugt; diese Dampfableitung 7 kann an eine im Mikrowellengerät vorgesehene Absaugvorrichtung angeschlossen werden. In der Bodenfläche 15 ist ein Ablauf für Kondenswasser usw. vorgesehen.

Der Wasserbehälter 3 kann auch einen viereckigen Querschnitt aufweisen und in Aufsicht rund sein. Es können mehrere Dampfzuleitungen 8 angeordnet sein. Die Form der Haube 2 soll so gewählt werden, dass die Reflexion der Mikrowellen intensiv ist.

Eine ähnliche jedoch andere Ausführungsform ist in Fig. 1 auf der linken Seite erkennbar. Der Behälter 12 ist seitlich über die reflektierende Fläche – also überstehend – ausgebildet. Da in diesem Fall nicht unbedingt eine reflektierende Fläche erforderlich ist, kann hier auch ein einfaches Metallmaterial – z.B. Metallgitter – vorgesehen sein; es sollen lediglich die Mikrowellen abgeschirmt werden, d.h. sie dürfen nicht unmittelbar an das Gargut gelangen.

Der Wasserbehälter 12 ragt seitlich so weit über die Haube 2, dass die Mikrowellen entsprechend dem Strahlengang 11 durch eine mikrowellendurchlässige Platte 19 auf den Wasserspiegel im Wasserraum 17 auftreffen. Der kurzfristige Erhitzungsvorgang läuft ab, wie oben beschrieben. Der Dampf im Dampfraum 18a gelangt durch eine dampfdurchlässige Abdeckung 13 des Wasserbehälters 12 in den Garraum 16. Im gezeigten Ausführungsbeispiel ist die Abdeckung 13 als perforierte Platte ausgebildet.

Die seitliche Wandung 21 des Wasserbehälters 12 kann ebenso wie die Grundplatte aus mikrowellenreflektierendem Material bestehen. Die mikrowellendurchlässige Platte 19 kann aus Glas, Porzellan, Keramik, Kunststoff usw. bestehen.

Bei dem in Fig. 2 gezeigten Ausführungsbeispiel ist der Wasserbehälter 12 unterhalb des Garraums 16 angeordnet und ist in einen Wasserraum 17 und Dampfraum 18a unterteilt. Die Mikrowellen 11 gelangen durch eine mikrowellendurchlässige Platte 19 und erhitzen das Wasser im Wasserraum 17. Der Dampf steigt durch eine als Abdeckung dienende perforierte Platte 22 in den Garraum 16 und erhitzt das Gargut, bei dem es sich hier um Eier 14 handelt. Eine mikrowellendurchlässige Abdeckung 1 ist oberhalb der Haube 2 auf einer Wandung 21 des Wasserbehälters 12, die aus mikrowellenreflektierendem Material bestehen kann, vorgesehen. Im Wasserbehälter 12 sind Reflexionsmittel 26 zur Umlenkung der Mikrowellen 11 schräg angeordnet. An dieser Stelle kann die Wandung 21 in einem stumpfen Winkel zum Boden des Wasserbehälters 12 ausgerichtet sein.

Bei bestimmten Gargütern, z.B. Eiern, dürfen auch mittelbar, d.h. nach Ablenkung, keine Mikrowellen auf das Gargut auftreffen. Bei dem Ausführungsbeispiel nach Figur 2 muss dann auch im unteren Bereich eine mikrowellenreflektierende Abdeckung vorgesehen sein.

Das reflektierende Material kann in einem Isoliermaterial, z.B. Glas, Keramik, Kunststoff, eingebettet oder auf einen Träger aufgedruckt oder angedampft sein.

Bei der erfindungsgemässen Zusatzvorrichtung wird nur sehr wenig Wasser benötigt. Die Wassermenge hängt von der Art und Menge des Garguts ab.

Die Kochzeit wird durch Einstellen einer Uhr bzw. die Wassermenge bestimmt; ist letztere verdampft, wird der Kochvorgang von selber beendet.

**Patentansprüche**

1. Zusatzvorrichtung für Mikrowellengeräte zum Kochen bzw. Garen solcher Gargüter, die nicht einer Kurzzeitgarung aussetzbar sind, mit einem Garraum, mit einer dampfdurchlässigen Abschirmung (Haube 2) gegen Mikrowellen, die das Gargut (14) im Garraum bereichsweise umgibt und gegen Mikrowellen abschirmt, dadurch gekennzeichnet, dass die Abschirmung (Haube 2) zwischen dem Garraum (16) und dem Mikrowellensender angeordnet ist und das Gargut (14) gegen direkt einfallende Mikrowellen abschirmt, dass der Garraum (16) mit einem zumindest teilweise mikrowellenexponierten Wasserbehälter (3, 12) zusammenwirkt, der einen Wasserraum (17) und einen Dampfraum (18, 18a) aufweist und dessen Wandungen zumindest teilbereichsweise mikrowellendurchlässig sind, und dass der Garraum (16) und der Dampfraum (18, 18a) durch mindestens eine Durchtrittsöffnung (8) miteinander kommunizierend verbunden sind.

2. Zusatzvorrichtung nach Anspruch 1, dadurch gekennzeichnet, dass der Wasserbehälter (3) oberhalb des Garraums (16) angeordnet ist.

3. Zusatzvorrichtung nach Anspruch 1 oder 2, dadurch gekennzeichnet, dass der Wasserbehälter (12) unterhalb des Garraums angeordnet ist.

4. Zusatzvorrichtung nach Anspruch 1, 2 oder 3, dadurch gekennzeichnet, dass der Wasserbehälter (12) seitlich des Garraums (16) angeordnet ist.

5. Zusatzvorrichtung nach Anspruch 2, 3 oder 4, dadurch gekennzeichnet, dass als Verbindung zwischen dem oberhalb des Wasserraums (17) angeordneten Dampfraum (18, 18a) und dem Garraum (16) ein Rohr (23) vorgesehen ist, das sich vom Garraum durch den Wasserraum in den Dampfraum erstreckt.

6. Zusatzvorrichtung nach Anspruch 2 oder einem der Ansprüche 3 bis 5, dadurch gekennzeichnet, dass die Abschirmung (2) aus mikrowellenreflektierendem Material und als Haube des Garraums ausgebildet ist, auf der der Wasserbehälter (3) angeordnet ist, dass der Wasserbehälter eine obere mikrowellendurchlässige Abdeckung (4) und eine seitliche Wandung (24) aufweist und dass zwischen der Haube und dem Wasserraum ein mikrowellendurchlässiger Boden (1) angeordnet ist.

7. Zusatzvorrichtung nach einem der Ansprüche 1 bis 6, dadurch gekennzeichnet, dass der Garraum (16) eine Dampfableitung (7) aufweist.

8. Zusatzvorrichtung nach Anspruch 7, dadurch gekennzeichnet, dass die Dampfableitung (7) an eine Absaugvorrichtung anschliessbar ist.

9. Zusatzvorrichtung nach einem der vorhergehenden Ansprüche, dadurch gekennzeichnet, dass der Wasserbehälter (12) unmittelbar unterhalb des Garraums (16) angeordnet ist, dass der Wasserbehälter eine Bodenplatte, eine seitliche Wandung (21) und eine zumindest bereichsweise mikrowellendurchlässige obere Abdeckung (19) aufweist und dass der Wasserbehälter den Garraum (16) seitlich überragt, wobei sich der Dampfraum (18a) oberhalb des Wasserraums (17) befindet.

10. Zusatzvorrichtung nach Anspruch 9, dadurch gekennzeichnet, dass die Abdeckung (13, 22) zwischen dem Wasserbehälter (12) und dem Garraum (16) wasserdampfdurchlässig ist.

11. Zusatzvorrichtung nach Anspruch 10, dadurch gekennzeichnet, dass die Abdeckung (13, 22) perforiert ist.

12. Zusatzvorrichtung nach Anspruch 9, 10 oder 11, dadurch gekennzeichnet, dass die Bodenplatte und die seitliche Wandung (21) mikrowellenreflektierend ausgebildet sind.

13. Zusatzvorrichtung nach einem der Ansprüche 9 bis 12, dadurch gekennzeichnet, dass sich die Wandung (21) über die Abdeckung (19) des Wasserbehälters hinaus bis oberhalb des Garraums (16) erstreckt und den Garraum seitlich umgibt und dass auf der Wandung (21) eine mikrowellendurchlässige Abdeckung (1) angeordnet ist.

14. Zusatzvorrichtung nach einem der Ansprüche 9 bis 13, dadurch gekennzeichnet, dass im Wasserbehälter (12) Reflexionsmittel (26) schräg zur Bodenplatte des Wasserbehälters zur Umlenkung der Mikrowellen angeordnet sind.

## Revendications

1. Accessoire pour appareils à micro-ondes destiné à cuire les denrées qui ne peuvent pas être exposées à une cuisson très courte, comportant une chambre de cuisson, avec un capot (2) formant écran contre les micro-ondes, perméable à la vapeur qui enferme la denrée à cuire (14) dans une zone appropriée, et la protège contre les micro-ondes, accessoire caractérisé en ce que le capot (2) de protection est disposé entre la chambre de cuisson (16) et l'émetteur de micro-ondes et protège la denrée à cuire (14) contre l'incidence directe des micro-ondes, que la chambre de cuisson (16) coopère avec un réservoir d'eau (3, 12) exposé au moins partiellement aux micro-ondes, et qui comporte une chambre à eau (17) et une chambre à vapeur (18, 18a) et dont les parois sont, au moins par zones partielles, perméables aux micro-ondes, et que la chambre de cuisson (16) et la chambre à vapeur (18, 18a) sont reliées, pour communiquer ensemble, par au moins un orifice de passage (8).

2. Accessoire suivant la revendication 1, caractérisé en ce que le réservoir à eau (3) est placé au-dessus en la chambre de cuisson (16).

3. Accessoire suivant les revendications 1 ou 2, caractérisé en ce que le réservoir à eau (12) est placé sous la chambre de cuisson.

4. Accessoire suivant les revendications 1, 2 ou 3, caractérisé en ce que le réservoir à eau (12) est placé sur le côté de la chambre de cuisson (16).

5. Accessoire suivant les revendications 2, 3 ou 4, caractérisé en ce que l'on prévoit, comme liaison entre la chambre à vapeur (18, 18a) placée au-dessus de la chambre à eau (17) et la chambre de cuisson (16), un tuyau (23) qui s'étend de la chambre de cuisson à la chambre à vapeur en passant par la chambre à eau.

6. Accessoire suivant la revendication 2 ou une des revendications 3 à 5, caractérisé en ce que l'écran de protection (2) est formé d'une matière réfléchissant les micro-ondes et sous la forme d'un capot de la chambre de cuisson sur lequel est disposé le réservoir d'eau (3), que le réservoir d'eau présente un couvercle (4) supérieur, perméable aux micro-ondes, et une paroi latérale (24), et qu'entre le capot et la chambre à eau, il est disposé un fond (1) perméable aux micro-ondes.

7. Accessoire suivant l'une des revendications 1 à 6, caractérisé en ce que la chambre de cuisson (16) comporte une conduite d'évacuation (7) de la vapeur.

8. Accessoire suivant la revendication 7, caractérisé en ce que la conduite d'évacuation (7) de la vapeur peut être raccordée à un dispositif d'aspiration.

9. Accessoire suivant l'une des revendications 1 à 8, caractérisé en ce que le réservoir d'eau (12) est placé immédiatement en-dessous de la chambre de cuisson (16), que ce réservoir présente une plaque de fond, une paroi latérale (21) et un couvercle (19) supérieure, perméable, au moins par zones, aux micro-ondes et que ce réservoir d'eau dépasse latéralement la chambre de cuisson (16), la chambre à vapeur (18a) se trouvant au-dessus de la chambre à eau (17).

10. Accessoire suivant la revendication 1, caractérisé en ce que le couvercle (13, 22) est perméable à la vapeur entre le réservoir d'eau (12) et la chambre de cuisson (16).

11. Accessoire suivant la revendication 10, caractérisé en ce que le couvercle (13, 22) est perforé.

12. Accessoire suivant l'une des revendications 9, 10 et 11, caractérisé en ce que la plaque de fond et la paroi latérale (21) sont réalisées de façon à réfléchir les micro-ondes.

13. Accessoire suivant l'une des revendications 9 à 12, caractérisé en ce que la paroi (21) s'étend au-delà du couvercle (19) du réservoir à eau jusqu'au-dessus de la chambre de cuisson (16), et entoure latéralement cette chambre de cuisson, et qu'il est disposé sur la paroi (21) un couvercle (1) perméable aux micro-ondes.

14. Accessoire suivant l'une des revendications 9 à 13, caractérisé en ce que l'on dispose, dans le réservoir d'eau (12), des organes réfléchissants (26) obliquement par rapport à la plaque de fond du réservoir d'eau, afin de dévier les micro-ondes.

## Claims

1. Accessory for microwave appliances for cooking or cooking through of suitable foodstuffs which cannot be subjected to short-term cooking, having a cooking space, and a steam-permeable screen (hood 2) providing protection against microwaves, which encloses the foodstuff (14) being treated in the oven in places and screens it from microwaves, characterised in that the screen (hood 2) is arranged between the oven (16) and the microwave emitter and screens the foodstuff being processed (14) from directly incident microwaves, that the oven (16) works in cooperation with a water tank (3, 12), which is at least partially exposed to microwaves and has a water chamber (17) and a steam chamber (18 and 18a) and whose walls are at least partially permeable to microwaves in places, and that the oven (16) and the steam chamber (18 and 18a) are connected together so as to communicate through at least one through aperture (8).

2. Accessory according to Claim 1, characterised in that the water tank (3) is arranged above the oven (16).

3. Accessory according to Claim 1, or 2, characterised in that the water tank (12) is arranged below the oven (16).

4. Accessory according to Claim 1, 2 or 3, characterised in that the water tank (12) is arranged at the side of the oven (16).

5. Accessory according to Claim 2, 3 or 4, characterised in that a tube (23), which extends from the oven through the water chamber into the steam chamber, is provided as a connection between the steam chamber (18 and 18a) which is arranged above the water chamber (17), and the oven (16).

6. Accessory according to Claim 2 or one of Claims 3 to 5, characterised in that the screen (2) is constructed of microwave-reflective material and as a cover for the oven, on which cover the water tank (3) is arranged, that the water tank has a microwave permeable upper cover (4) and a side wall (24), and that between the cover and the water chamber there is arranged a microwave permeable base (1).

7. Accessory according to one of Claims 1 to 6, characterised in that the processing chamber (16) has a steam outlet (7).

8. Accessory according to Claim 7, characterised in that the steam outlet (7) can be connected to a suction device.

9. Accessory according to one of the preceding Claims, characterised in that the water tank (12) is arranged directly below the oven (16), that the water tank has a base plate, a side wall (21) and an upper cover (19) which is permeable to microwaves at least in places, and that the water tank projects laterally over the oven (16), so that the steam chamber (18a) is situated above the water chamber (17).

10. Accessory according to Claim 9, characterised in that the cover (13, 22) between the water tank (12) and the processing chamber (16) is steam permeable.

11. Accessory according to Claim 10, characterised in that the cover (13, 22) is perforated.

12. Accessory according to Claim 9, 10 or 11, characterised in that the base plate and the side wall (21) are constructed so as to reflect microwaves.

13. Accessory according to one of Claims 9 to 12, characterised in that the wall (21) extends across the cover (19) of the water tank to above the oven (16) and surrounds the oven at the side, and that a microwave permeable coating (1) which is arranged on the wall (21).

14. Accessory according to one of Claims 9 to 13, characterised in that reflecting means (26) are arranged in the water tank (12) at a slant to the base plate of the water tank for purposes of deflecting the microwaves.

**FIG.1**

**FIG.2**